(19) Europäisches Patentamt / European Patent Office / Office européen des brevets

(11) **EP 4 377 123 B1**

(12) **EUROPÄISCHE PATENTSCHRIFT**

(45) Veröffentlichungstag und Bekanntmachung des Hinweises auf die Patenterteilung:
**26.03.2025  Patentblatt 2025/13**

(21) Anmeldenummer: **22757563.6**

(22) Anmeldetag: **26.07.2022**

(51) Internationale Patentklassifikation (IPC):
**B60L 3/00** *(2019.01)*      **B60L 50/60** *(2019.01)*
**B60L 53/14** *(2019.01)*      **G01R 27/00** *(2006.01)*

(52) Gemeinsame Patentklassifikation (CPC):
**B60L 3/0069; B60L 50/60; B60L 53/14**

(86) Internationale Anmeldenummer:
**PCT/EP2022/070950**

(87) Internationale Veröffentlichungsnummer:
**WO 2023/006751 (02.02.2023 Gazette 2023/05)**

(54) **BORDNETZ FÜR EIN KRAFTFAHRZEUG UND VERFAHREN**

ON-BOARD POWER SUPPLY FOR A VEHICLE AND METHOD

RÉSEAU DE BORD POUR UN VÉHICULE AUTOMOBILE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2021  DE 102021003844**

(43) Veröffentlichungstag der Anmeldung:
**05.06.2024  Patentblatt 2024/23**

(73) Patentinhaber: **Mercedes-Benz Group AG**
**70372 Stuttgart (DE)**

(72) Erfinder:
• **CANDIR, Akin**
**70794 Filderstadt (DE)**
• **BOEHME, Urs**
**71139 Ehningen (DE)**

(74) Vertreter: **Novagraaf Group**
**Chemin de l'Echo 3**
**1213 Onex / Geneva (CH)**

(56) Entgegenhaltungen:
EP-A1- 3 640 076          DE-A1- 102017 218 586
DE-A1- 102019 202 892

**Beschreibung**

Die Erfindung betrifft ein Bordnetz für ein Kraftfahrzeug gemäß dem Oberbegriff des Anspruchs 1.

Aus DE 10 2019 202 892 A1 ist eine Bordnetzanordnung für ein Kraftfahrzeug bekannt, wobei die Bordnetzanordnung einen Hochvolt-Energiespeicher zur Bereitstellung eines ersten Hochvolt-Potenzials und eines zweiten vom ersten verschiedenen Hochvolt-Potenzials aufweist, sodass zwischen dem ersten und dem zweiten Hochvolt-Potenzial eine Gesamtspannung abgreifbar ist. Weiterhin weist die Bordnetzanordnung einen ersten Isolationswiderstand zwischen dem ersten Hochvolt-Potenzial und einer vorbestimmten elektrischen Masse sowie einen zweiten Isolationswiderstand zwischen dem zweiten Hochvolt-Potenzial und der vorbestimmten elektrischen Masse und eine Isolationsüberwachungseinrichtung auf, die dazu ausgelegt ist, den ersten und zweiten Isolationswiderstand zu überwachen. Das HV(Hochvolt)-Bordnetz eines Fahrzeugs mit Elektroantrieb besteht typischerweise mindestens aus einer HV-Batterie mit Batterieschützen und HV-Verbrauchern, zum Beispiel einem Puls-Wechselrichter. In der Regel ist das Hochvolt-Bordnetz als IT (Isole Terre)-Netz umgesetzt und somit komplett galvanisch getrennt von der Fahrzeugmasse. Über parasitäre Widerstände in den Kabeln, HV-Verbrauchern, der Batterie und so weiter, ergibt sich jedoch eine hochimpedante Verbindung zwischen dem positiven beziehungsweise negativen Hochvolt-Potenzial und der Fahrzeugmasse, der sogenannte Isolationswiderstand, beziehungsweise der oben genannte jeweilige erste und zweite Isolationswiderstand. Solange dieser Widerstand hochohmig, das heißt im Megaohmbereich, ist, besteht keine Gefährdung. Aus Sicherheitsgründen wird mittels einer Isolationsüberwachungseinrichtung, auch Isolationswächter genannt, dieser Isolationswiderstand permanent überwacht. Bei Unterschreitung eines definierten Schwellwerts kann eine Warnung generiert und je nach Betriebszustand das HV-Bordnetz von der Batterie über die Batterieschütze abgetrennt und ein sicherer Zustand hergestellt werden. Neben dem Isolationswiderstand existieren in jedem HV-Bordnetz Kapazitäten, insbesondere sogenannte Erdkapazitäten, die zwischen den HV-Anschlüssen und der Fahrzeugmasse liegen. Diese ergeben sich durch parasitäre Effekte, zum Beispiel bedingt durch Kabelschirme, und werden sogar bewusst eingebaut, um das EMV(elektromagnetische Verträglichkeit)-Verhalten zu verbessern. Nach der Formel $E = \frac{1}{2} \times C \times U^2$ ist in diesen Kondensatoren der Kapazität C bei einer anliegenden Spannung U eine Energie E gespeichert. Wird dann von einer Person ein Hochvolt-Kontakt und die Fahrzeugmasse gleichzeitig berührt, werden diese Kondensatoren über den Körper entladen bzw. umgeladen und könnten prinzipiell, d.h. wenn diese Ströme zu hoch wären, zu einer Gefährdung führen. Um das Gefährdungspotenzial gering zu halten, existieren daher in unterschiedlichen Normen Grenzwerte für die maximal erlaubte gespeicherte, oder besser gesagt wirksame Energie in den Kondensatoren. Dies hat direkt eine Begrenzung der maximal zulässigen Gesamtkapazität in Abhängigkeit von der HV-Gesamtspannung zur Folge. Zudem muss aus Sicherheitsgründen der schlimmste Fall angenommen werden, und von einem maximal unsymmetrischen HV-Bordnetz ausgegangen werden, welches vorliegt, wenn die Spannung eines HV-Pols gemessen gegen Erde nahezu der gesamten HV-Spannung entspricht. Dies kann unter anderem durch Schmutzwiderstände oder Leckströme über die Lebensdauer auftreten. Durch die oben beschriebene Beschränkung der maximal zulässigen Gesamtkapazität besteht damit auch bei unsymmetrischem Bordnetz, das heißt wenn die Spannungen zwischen dem positiven Hochvolt-Potenzial und der Masse sowie zwischen dem negativen Hochvolt-Potenzial und der Masse unterschiedlich sind, kein Gefährdungspotenzial. Neben dem Nachteil der Begrenzung der maximal zulässigen Gesamtkapazität kann es zudem in diesem Fall, d.h. bei unsymmetrischem Bordnetz, vorkommen, dass beim Verbinden des Fahrzeugs, zum Beispiel über die DC-Ladeschnittstelle, mit einer Ladesäule das positive beziehungsweise negative Spannungspotenzial gegenüber Erde von Ladesäule und Fahrzeug unterschiedlich ist. Dies kann beim Zuschalten der Ladesäule zu unerwünschten, undefinierten Ausgleichsvorgängen führen, welche im schlimmsten Fall ein Laden verhindern können.

Der Erfindung liegt die Aufgabe zu Grunde, ein verbessertes Bordnetz für ein Kraftfahrzeug, insbesondere für ein elektrisch angetriebenes Kraftfahrzeug, anzugeben.

Die Aufgabe wird erfindungsgemäß gelöst durch ein Bordnetz für ein Kraftfahrzeug gemäß Anspruch 1.

Vorteilhafte Ausgestaltungen der Erfindung sind Gegenstand der Unteransprüche.

Ein erfindungsgemäßes Bordnetz für ein Kraftfahrzeug umfasst mindestens eine HV-Batterie zur Bereitstellung eines positiven Potenzials und eines negativen Potenzials sowie mindestens einen HV-Verbraucher, wobei ein Isolationswächter zur Überwachung von Isolationswiderständen zu einer vom Bordnetz galvanisch getrennten Fahrzeugmasse vorgesehen ist, wobei zwischen dem positiven Potenzial und der Fahrzeugmasse sowie zwischen dem negativen Potenzial und der Fahrzeugmasse jeweils eine Y-Kapazität vorgesehen ist. Erfindungsgemäß ist ein im Bordnetz oder in einer Komponente des Bordnetzes vorhandener Spannungs-Mittelabgriff zwischen dem positiven Potenzial und dem negativen Potenzial mittels eines ohmschen Koppelwiderstandes mit der Fahrzeugmasse verbunden. Der Isolationswächters kann beispielsweise als Widerstands-Isolationswächter ausgebildet sein.

Durch die erfindungsgemäße Lösung ist die Abweichung der Verteilung der Potenziale von einer symmetrischen Verteilung sehr gering. Somit ist der in den Y-Kapazitäten gespeicherte Energiegehalt/die Ladung immer sehr nahe am erreichbaren Minimum. Dadurch kann im Bordnetz eine größere Y-Kapazität erlaubt werden, wobei trotzdem die gesetzlichen Vorgaben hinsichtlich der gespeicherten Energie/Ladung erfüllt werden. Eine günstigere und/oder bessere EMV-Filterung in den Komponenten des Hochvolt-Bordnetzes ist somit möglich.

Erfindungsgemäß liegt der Spannungs-Mittelabgriff zwischen zwei als Spannungsteiler geschalteten Widerständen oder ist von einem kapazitiven Spannungsteiler gebildet.

Der Koppelwiderstand ist erfindungsgemäß als Reihenschaltung aus einem Festwiderstand und einem variablen Widerstand ausgebildet.

In einer Ausführungsform sind die Widerstände des Spannungsteilers als in Reihe geschaltete HV-Verbraucher oder als Innenwiderstände mindestens zweier in Reihe geschalteter HV-Batterien ausgebildet.

In einer Ausführungsform sind die Widerstände des Spannungsteilers wesentlich kleiner im Vergleich zum Koppelwiderstand und zu Messwiderständen des Isolationswächters, der als Widerstands-Isolationswächter ausgebildet ist.

In einer Ausführungsform liegen die Messwiderstände und der Koppelwiderstand im Bereich von mehr als 100 kOhm.

In einer Ausführungsform ist über den Koppelwiderstand mindestens eines aus der folgenden Liste mit der Fahrzeugmasse gekoppelt:

- eine Reihenschaltung von HV-Spannungsversorgungen für ein Controlboard,
- eine Reihenschaltung von Halbbrücken und/oder H-Brücken,
- eine Multilevel-Halbbrücke,
- eine Reihenschaltung von Invertern,
- ein Multilevel-Inverter,
- eine Heizschaltung mit Reihenschaltungen von zwei oder mehreren Heizelementen,
- ein Abgriff eines Verbindungspunkts von Batterie-Modul-Reihenschaltungen.

Das Bordnetz kann Teil eines Kraftfahrzeugs, insbesondere eines elektrisch angetriebenen Kraftfahrzeugs, sein.

Wenn der Koppelwiderstand als Reihenschaltung aus dem Festwiderstand und dem variablen Widerstand ausgebildet ist, so kann dann, wenn das Fahrzeug nicht an einer DC-Ladesäule angeschlossen ist, ein hoher variabler Widerstand eingestellt werden, während dann, wenn das Fahrzeug mit einer DC-Ladesäule verbunden ist, ein niedrigerer variabler Widerstand eingestellt wird.

Ausführungsbeispiele der Erfindung werden im Folgenden anhand von Zeichnungen näher erläutert.

Dabei zeigen:

Fig. 1    eine schematische Ansicht eines Bordnetzes eines Kraftfahrzeugs,

Fig. 2    eine schematische Ansicht einer Ausführungsform eines Bordnetzes eines Kraftfahrzeugs,

Fig. 3    eine schematische Ansicht einer weiteren Ausführungsform eines Bordnetzes eines Kraftfahrzeugs,

Fig. 4    eine schematische Ansicht einer weiteren Ausführungsform eines Bordnetzes eines Kraftfahrzeugs,

Fig. 5    eine schematische Ansicht einer weiteren Ausführungsform eines Bordnetzes eines Kraftfahrzeugs,

Fig. 6    eine schematische Ansicht einer weiteren Ausführungsform eines Bordnetzes eines Kraftfahrzeugs,

Fig. 7    eine schematische Ansicht einer weiteren Ausführungsform eines Bordnetzes eines Kraftfahrzeugs,

Fig. 8    eine schematische Ansicht eines Simulationsaufbaus einer Ausführungsform eines Bordnetzes eines Kraftfahrzeugs,

Fig. 9    schematische Diagramme zur Darstellung von Simulationsergebnissen für eine Simulation ohne Koppelwiderstand, und

Fig. 10   schematische Diagramme zur Darstellung von Simulationsergebnissen für eine Simulation mit einem Koppelwiderstand.

Einander entsprechende Teile sind in allen Figuren mit den gleichen Bezugszeichen versehen.

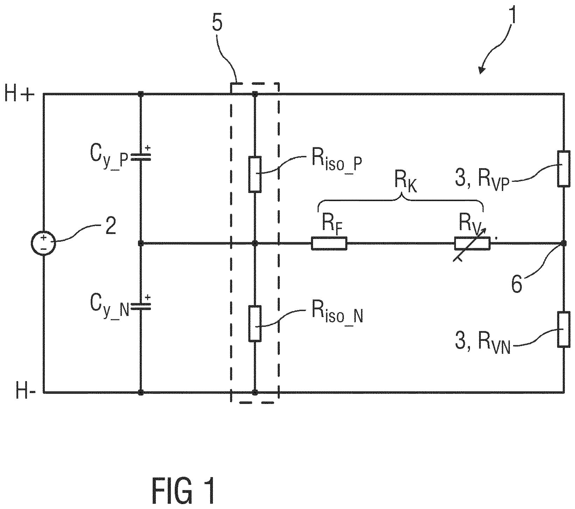

Figur 1 ist eine schematische Ansicht eines Bordnetzes 1 eines Kraftfahrzeugs, beispielsweise eines elektrisch angetriebenen Kraftfahrzeugs.

Das Bordnetz 1 ist beispielsweise ein HV(Hochvolt)-Bordnetz und umfasst typischerweise mindestens eine HV-Batterie 2 sowie HV-Verbraucher 3, 4. In der Regel ist das Bordnetz 1 galvanisch getrennt von einer Fahrzeugmasse PA. Zwischen einem positiven Potenzial H+ und der Fahrzeugmasse PA sowie zwischen einem negativen Potenzial H- und der Fahrzeugmasse PA ergibt sich durch parasitäre Effekte jeweils ein Isolationswiderstand $R_{iso\_P}$, $R_{iso\_N}$. Aus Sicherheitsgründen ist ein Isolationswächter 5 vorgesehen, der die Isolationswiderstände $R_{iso\_P}$, $R_{iso\_N}$ überwacht. Ferner sind zwischen dem positiven Potenzial H+ und der Fahrzeugmasse PA sowie zwischen dem negativen Potenzial H- und der Fahrzeugmasse PA jeweils Y-Kapazitäten $C_{Y\_P}$,

$C_{Y\_N}$ vorgesehen.

Schwankungen im Bordnetz 1, die durch den Isolationswächter 5, der insbesondere als ein Widerstands-Isolationswächter ausgebildet sein kann, hervorgerufen werden, können reduziert werden, indem ein im Bordnetz 1 oder in einer Komponente des Bordnetzes 1, beispielsweise einem HV-Verbraucher 3, 4, der in Figur 1 durch zwei als Spannungsteiler geschaltete Verbraucherwiderstände $R_{VP}$ und $R_{VN}$ symbolisiert ist, vorhandener Spannungs-Mittelabgriff 6 genutzt wird. Dieser Spannungs-Mittelabgriff 6 wird dabei über einen ohmschen Koppel-Widerstand $R_K$, der einen Festwiderstand $R_F$ und einen variablen Widerstand $R_V$ umfassen kann, mit der Fahrzeugmasse PA verbunden. In der gezeigten Ausführungsform ist der Koppel-Widerstand $R_K$ als Reihenschaltung aus einem Festwiderstand $R_F$ und einem variablem Widerstand $R_V$ ausgebildet.

In anderen Ausführungsformen kann der Spannungs-Mittelabgriff 6 auch mittels eines kapazitiven Spannungsteilers gebildet sein.

Durch die Ankopplung des Spannungs-Mittelabgriffs 6 an die Fahrzeugmasse PA mittels des Koppelwiderstandes $R_K$ wird der Einfluss des Isolationswächters 5 auf die Verschiebung der Potenziale H+, H- bezogen auf die Fahrzeugmasse PA reduziert. Der Isolationswächter 5 ist dabei in seiner Funktion bei der Berechnung des Isolationswertes der Isolationswiderstände $R_{iso\_P}$, $R_{iso\_N}$ nicht gestört, insbesondere wenn der Koppelwiderstand $R_K$ sich während der Messdauer des Isolationswächters 5 nicht in seinem Wert ändert. Durch die nur geringe Verschiebung der Potenziale H+, H- kann der in den Y-Kapazitäten $C_{Y\_P}$, $C_{Y\_N}$ des Bordnetzes 1 gespeicherte Energieinhalt reduziert werden. Dies ist vorteilhaft zur Verbesserung der Filterung von aktiven, insbesondere taktenden, HV-Komponenten und für Fahrzeuge mit höheren DC-Systemspannungen, beispielsweise 800V. Zudem besteht die Möglichkeit, beim Koppeln von HV-Systemen mit unterschiedlichen Isolationsauslegungen, eine Überlastung der Isolation des schwächer ausgelegten HV-Systems zu vermeiden, beispielsweise wird die Isolation einer 500V-Ladesäule beim Laden eines 800V-Fahrzeugs über ein galvanisch gekoppeltes Ladesystem geschützt.

Der Isolationswächter 5 weist durch den Koppelwiderstand $R_K$ eine wesentlich kürzere Erkennungszeit auf, da Umladevorgänge schneller ablaufen.

Durch Einsatz einer Reihenschaltung eines Festwiderstandes $R_F$ mit einem variablen Widerstand $R_V$ kann eine höhere Isolation erlaubt sein, wenn das HV-System über eine niedrigere Y-Kapazität $C_{Y\_P}$, $C_{Y\_N}$ verfügt, beispielsweise wenn das Fahrzeug nicht an einer DC-Ladesäule angeschlossen ist. Wenn die Y-Kapazität $C_{Y\_P}$, $C_{Y\_N}$ höher ist, beispielsweise wenn das Fahrzeug mit einer DC-Ladesäule verbunden ist, so kann der Koppelwiderstand $R_K$ durch seinen variablen Widerstand $R_V$ reduziert werden und die Potenzialverschiebung durch den Isolationswächter 5 fällt geringer aus. Beispiele für die Einsatzmöglichkeit einer ohmschen Kopplung eines Spannungs-Mittelabgriffs 6 zur Fahrzeugmasse PA sind:

- Reihenschaltung von HV-Spannungsversorgungen für Controlboards,
- Serienschaltungen von Halbbrücken und H-Brücken,
- Multilevel-Halbbrücken,
- Serienschaltungen von Invertern,
- Multilevel-Inverter,
- Heizschaltungen mit Reihenschaltungen von zwei oder mehreren Heizelementen,
- Abgriffe von Verbindungspunkten von Batterie-Modul-Reihenschaltungen.

Vorzugsweise sind die Impedanzen von Reihenschaltungen aus HV-Verbrauchern 3, 4 oder HV-Quellen im Vergleich zum Koppelwiderstand $R_K$ und zu Messwiderständen des Isolationswächters 5 wesentlich kleiner. Da die Messwiderstände $R_{mess\_p}$, $R_{mess\_n}$ und der Koppelwiderstand $R_K$ im Bereich von mehreren 100kOhm oder sogar im MOhm-Bereich liegen können, ist bei den Reihenschaltungen aus HV-Verbrauchern 3, 4 oder HV-Quellen keine große Leistungsaufnahme notwendig, um eine wesentlich kleinere Impedanz darzustellen. Insofern sind auch Hilfs-Spannungsversorgungen für diesen Einsatz geeignet. Bei HV-Quellen sind/ist die Quellimpedanz und/oder der Innenwiderstand zu berücksichtigen. Dieser liegt im Normalfall im mOhm-Bereich und erfüllt somit auch diese Anforderung.

In den folgenden Figuren ist anstelle der Serienschaltung eines Festwiderstandes $R_F$ und eines variablen Widerstandes $R_V$ nur ein einziger Koppelwiderstand $R_K$ dargestellt. In jedem Fall kann stattdessen jedoch auch eine Serienschaltung eines Festwiderstandes $R_F$ und eines variablen Widerstandes $R_V$ vorgesehen sein.

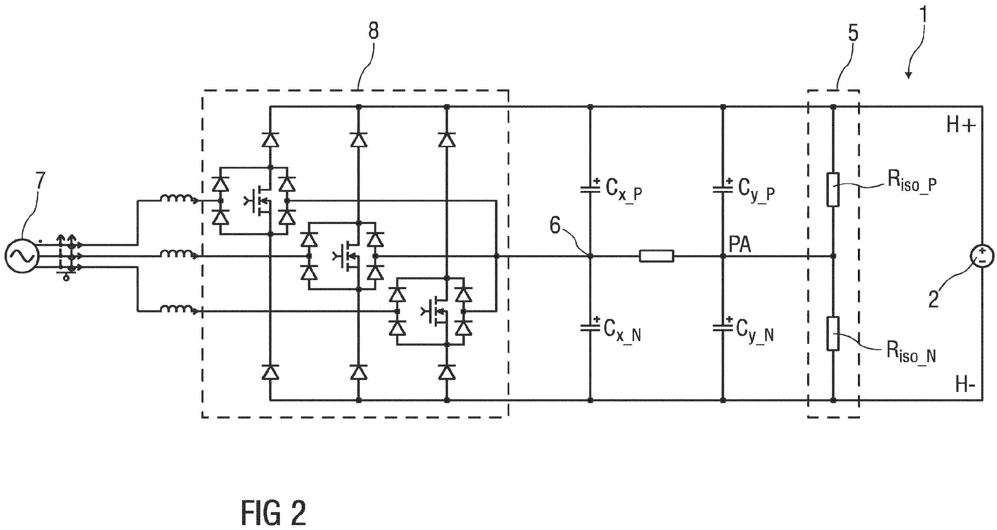

Figur 2 ist eine schematische Ansicht einer Ausführungsform eines Bordnetzes 1 eines Kraftfahrzeugs, beispielsweise eines elektrisch angetriebenen Kraftfahrzeugs. Die Ausführungsform gemäß Figur 2 stimmt mit der Ausführungsform gemäß Figur 1 weitgehend überein. Der Spannungs-Mittelabgriff 6 wird jedoch mittels eines kapazitiven Spannungsteilers aus zwei Kapazitäten $C_{x\_P}$, $C_{x\_N}$ anstatt durch Verbraucherwiderstände gebildet.

Außerdem ist das Bordnetz 1 mit einem Dreiphasen-Wechselspannungs-Anschluss 7 über einen Gleichrichter 8 mit Leistungsfaktorkorrektur (3-Level PFC, beispielsweise ein Vienna-Rectifier) verbunden.

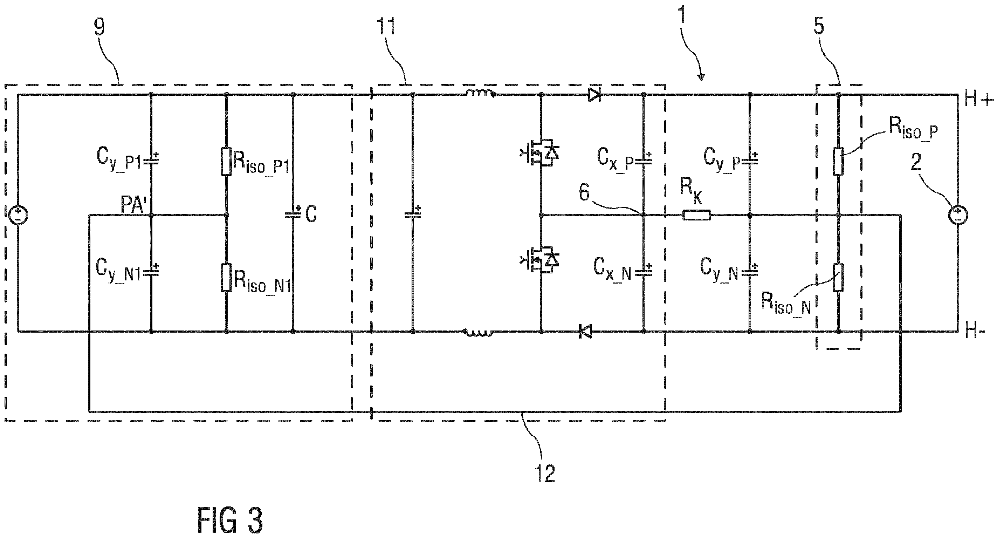

Figur 3 ist eine schematische Ansicht einer Ausführungsform eines Bordnetzes 1 eines Kraftfahrzeugs, beispielsweise eines elektrisch angetriebenen Kraftfahrzeugs. Die Ausführungsform gemäß Figur 3 stimmt mit der Ausführungsform gemäß Figur 1 weitgehend überein. Der Spannungs-Mittelabgriff 6 wird jedoch mittels eines kapazitiven Spannungsteilers aus zwei Kapazitäten $C_{x\_P}$, $C_{x\_N}$ anstatt durch Verbraucherwiderstände gebildet.

Außerdem ist das Bordnetz 1 mit einer DC-Ladesäule 9, die mit Y-Kapazitäten $C_{y\_P1}$, $C_{y\_N1}$, Isolationswiderständen $R_{iso\_P1}$, $R_{iso\_N1}$ ähnlich wie beim Bordnetz 1 und mit einer Ausgangskapazität C dargestellt ist, über einen 3-Level-DC-Boost-Wandler 11 im Fahrzeug verbunden, wobei der kapazitive Spannungsteiler aus den zwei Kapazitäten $C_{x\_P}$, $C_{x\_N}$ im 3-Level-DC-Boost-Wandler 11 angeordnet ist. Ferner ist die Fahrzeugmasse PA mit einer Masse PA' in der DC-Ladesäule 9 über ein Massekabel 12 verbunden.

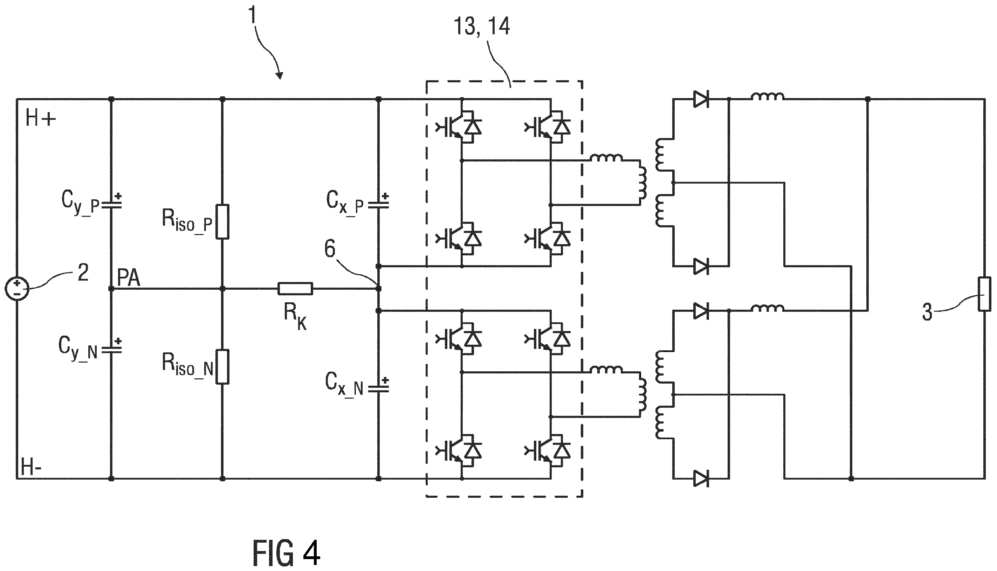

Figur 4 ist eine schematische Ansicht einer Ausführungsform eines Bordnetzes 1 eines Kraftfahrzeugs, beispielsweise eines elektrisch angetriebenen Kraftfahrzeugs. Die Ausführungsform gemäß Figur 4 stimmt mit der Ausführungsform gemäß Figur 1 weitgehend überein. Der Spannungs-Mittelabgriff 6 wird jedoch mittels eines kapazitiven Spannungsteilers aus zwei Kapazitäten $C_{x\_P}$, $C_{x\_N}$ anstatt durch Verbraucherwiderstände gebildet.

Außerdem ist das Bordnetz 1 mit einer Reihenschaltung von H-Brücken 13, 14, beispielsweise LV-DCDC-Wandler oder isolierte DCDC-Wandler eines Bordladers verbunden.

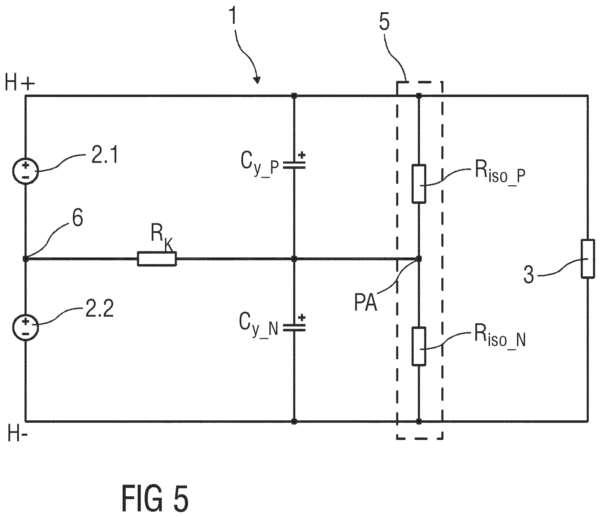

Figur 5 ist eine schematische Ansicht einer Ausführungsform eines Bordnetzes 1 eines Kraftfahrzeugs, beispielsweise eines elektrisch angetriebenen Kraftfahrzeugs.

Das Bordnetz 1 umfasst zwei in Reihe geschaltete HV-Batterien 2.1, 2.2 oder Batteriestränge sowie einen HV-Verbraucher 3. Das Bordnetz 1 ist galvanisch getrennt von einer Fahrzeugmasse PA. Zwischen einem positiven Potenzial H+ und der Fahrzeugmasse PA sowie zwischen einem negativen Potenzial H- und der Fahrzeugmasse PA ergibt sich durch parasitäre Effekte jeweils ein Isolationswiderstand $R_{iso\_P}$, $R_{iso\_N}$. Aus Sicherheitsgründen ist ein Isolationswächter 5 vorgesehen, der die Isolationswiderstände $R_{iso\_P}$, $R_{iso\_N}$ überwacht. Ferner sind zwischen dem positiven Potenzial H+ und der Fahrzeugmasse PA sowie zwischen dem negativen Potenzial H- und der Fahrzeugmasse PA jeweils Y-Kapazitäten $C_{Y\_P}$, $C_{Y\_N}$ vorgesehen. Der HV-Verbraucher 3 ist zwischen dem positiven Potenzial H+ und dem negativen Potenzial H-angeschlossen.

Schwankungen im Bordnetz 1, die durch den Isolationswächter 5, der insbesondere als ein Widerstands-Isolationswächter ausgebildet sein kann, hervorgerufen werden, können reduziert werden, indem ein im Bordnetz 1 oder in einer Komponente des Bordnetzes 1, beispielsweise den HV-Batterien 2.1, 2.2, die in Figur 5 in Reihe geschaltet sind und deren Innenwiderstände somit einen Spannungsteiler bilden, vorhandener Spannungs-Mittelabgriff 6 genutzt wird. Dieser Spannungs-Mittelabgriff 6 wird dabei über einen ohmschen Koppel-Widerstand $R_K$, der einen Festwiderstand $R_F$ und/oder einen variablen Widerstand $R_V$ umfassen kann, mit der Fahrzeugmasse PA verbunden.

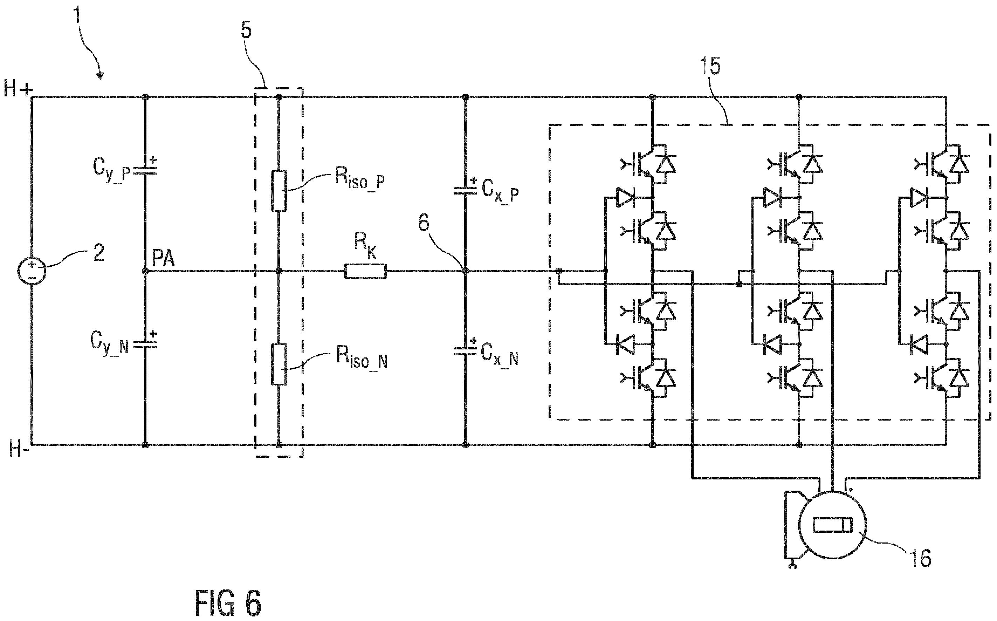

Figur 6 ist eine schematische Ansicht einer Ausführungsform eines Bordnetzes 1 eines Kraftfahrzeugs, beispielsweise eines elektrisch angetriebenen Kraftfahrzeugs. Die Ausführungsform gemäß Figur 6 stimmt mit der Ausführungsform gemäß Figur 1 weitgehend überein. Der Spannungs-Mittelabgriff 6 wird jedoch mittels eines kapazitiven Spannungsteilers aus zwei Kapazitäten $C_{x\_P}$, $C_{x\_N}$ anstatt durch Verbraucherwiderstände gebildet.

Außerdem ist das Bordnetz 1 mit einem 3-Level-Inverter 15 für eine elektrische Maschine 16 verbunden. Der 3-Level-Inverter 15 kann beispielsweise als ein 3-Level-NPC-Inverter, ein T-Type-Inverter oder ein Flying-Inverter ausgebildet sein.

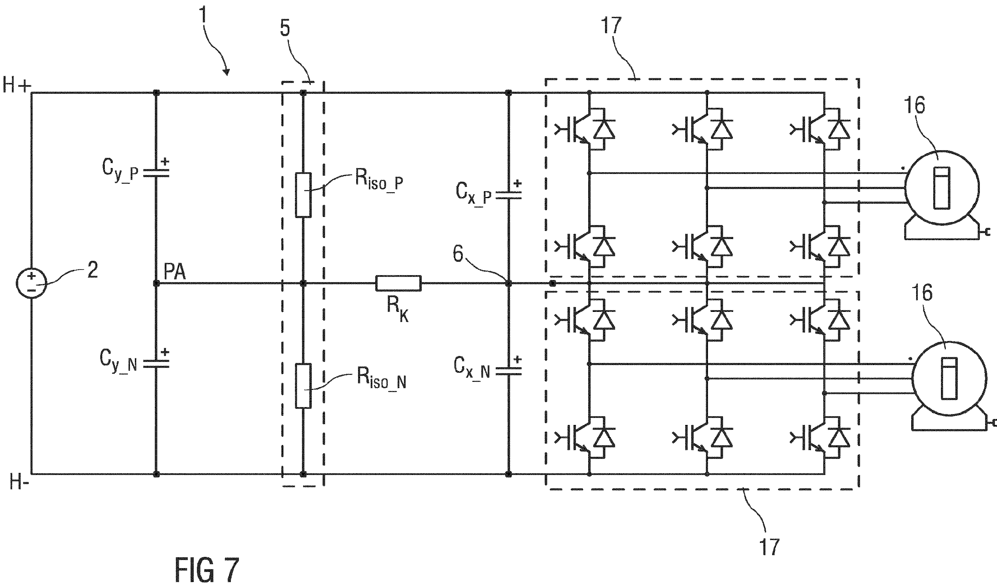

Figur 7 ist eine schematische Ansicht einer Ausführungsform eines Bordnetzes 1 eines Kraftfahrzeugs, beispielsweise eines elektrisch angetriebenen Kraftfahrzeugs. Die Ausführungsform gemäß Figur 7 stimmt mit der Ausführungsform gemäß Figur 1 weitgehend überein. Der Spannungs-Mittelabgriff 6 wird jedoch mittels eines kapazitiven Spannungsteilers aus zwei Kapazitäten $C_{x\_P}$, $C_{x\_N}$ anstatt durch Verbraucherwiderstände gebildet.

Außerdem ist das Bordnetz 1 mit einer Reihenschaltung aus zwei B&-Brücken-Invertern 17 für zwei elektrische Maschinen 16 verbunden.

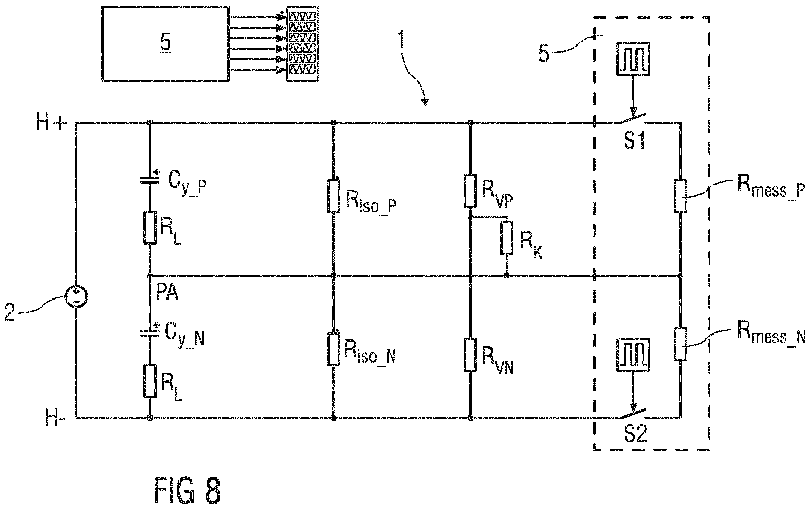

Figur 8 ist eine schematische Ansicht eines Simulationsaufbaus einer Ausführungsform eines Bordnetzes 1 eines Kraftfahrzeugs, beispielsweise eines elektrisch angetriebenen Kraftfahrzeugs. Die Ausführungsform gemäß Figur 8 stimmt mit der Ausführungsform gemäß Figur 1 weitgehend überein. Ferner sind zwei Messwiderstände $R_{mess\_p}$, $R_{mess\_n}$ des Isolationswächters 5 zwischen dem positiven Potenzial H+ und der Fahrzeugmasse PA sowie zwischen dem negativen Potenzial H- und der Fahrzeugmasse PA mittels jeweiliger Schalter S1, S2 zuschaltbar angeordnet. Dargestellt sind weiterhin Leitungswiderstände $R_L$ in Serie mit den Y-Kapazitäten $C_{Y\_P}$, $C_{Y\_N}$, die bei realen Bauelementen unvermeidlich vorhanden sind und daher in der Simulation berücksichtigt werden müssen, wenn auch nur mit einem sehr geringen Widerstandswert von beispielsweise 0,01 Ohm.

Folgende Simulationsparameter wurden verwendet:

$$R_{iso\_p} = 10^8 \text{ Ohm}$$

$$R_{iso\_n} = 10^8 \text{ Ohm}$$

$$R_{mess\_p} = R_{mess\_n} = 2*10^6 \text{ Ohm}$$

$$\text{Frequenz } f = 1/20 \text{ Hz}$$

$$\text{Spannung } U = 800 \text{ V}$$

$$R_{VP} = U*U/1000$$

$$R_{VN} = U*U/1000$$

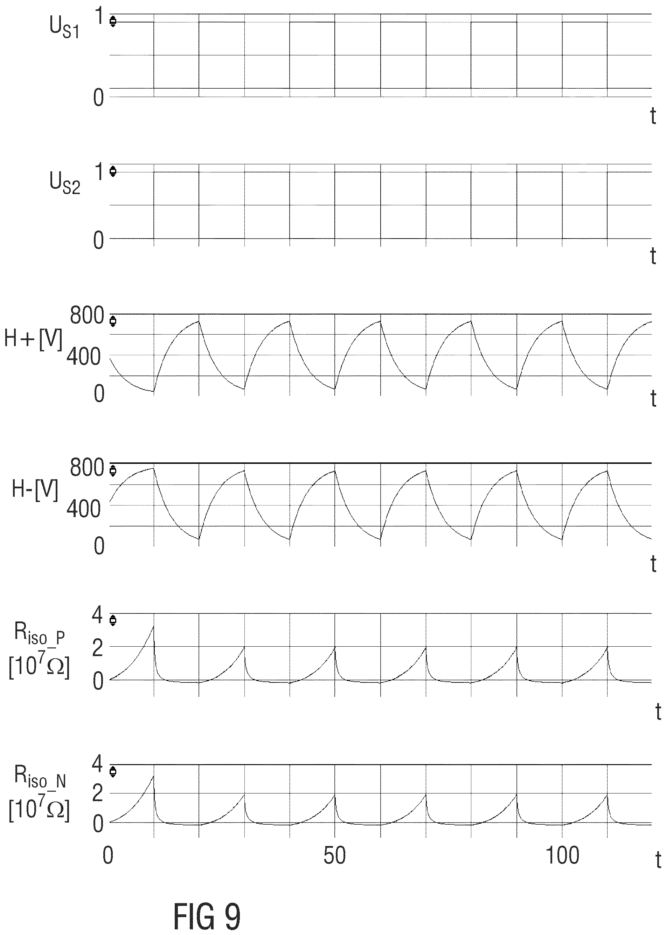

Figur 9 zeigt schematische Diagramme zur Darstellung von Schaltstellungen $U_{S1}$, $U_{S2}$ der Schalter S1, S2, der Potenziale H+, H- und der berechneten Isolationswiderstände $R_{iso\_P}$, $R_{iso\_N}$ über der Zeit t für eine Simulation ohne den Koppelwiderstand $R_K$.

Bedingt durch das gut isolierte HV-Bordnetz 1 verursacht der Isolationswächter 5, insbesondere ein Widerstands-Isolationswächter, eine deutliche Verschiebung der Potenziale H+, H-. Die Y-Kapazitäten $C_{Y\_P}$, $C_{Y\_N}$ nehmen somit eine Spannung an, die fast der Spannung der HV-Batterie 2 entspricht. Ihr Energieinhalt ist demnach sehr hoch. Die Umladezeit ist durch die hochohmigen Widerstände recht langsam und die Umladung ist in diesem Beispiel in der Taktzeit des Isolationswächters 5 noch nicht abgeschlossen.

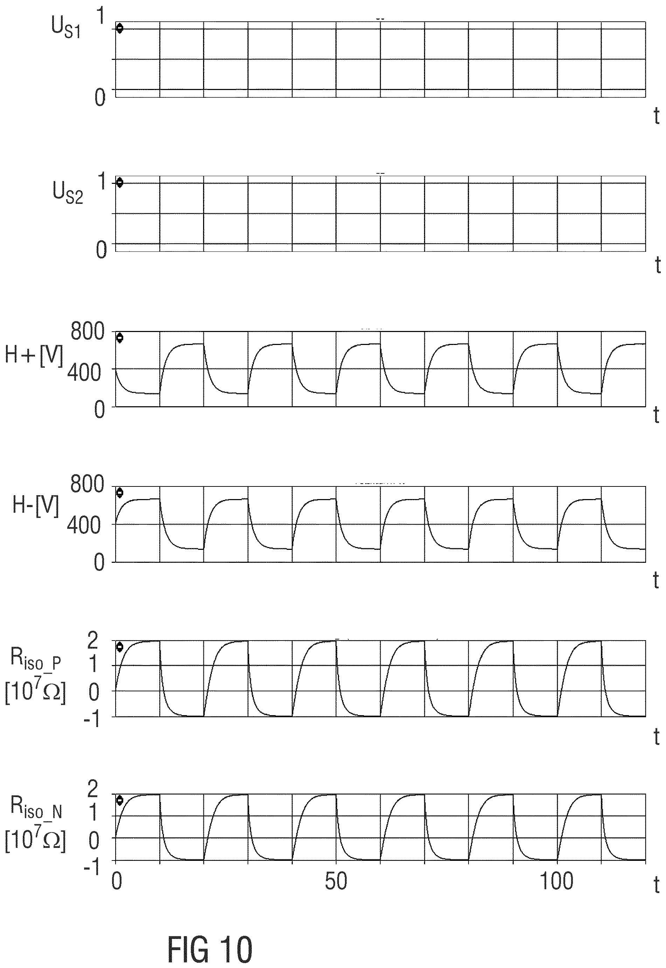

Figur 10 zeigt schematische Diagramme zur Darstellung von Schaltstellungen $U_{S1}$, $U_{S2}$ der Schalter S1, S2, der Potenziale H+, H- und der berechneten Isolationswiderstände $R_{iso\_P}$, $R_{iso\_N}$ über der Zeit t für eine Simulation mit einem Koppelwiderstand $R_K$ von $10^6$ Ohm.

In der Simulation wird deutlich, dass die Potenziale H+, H- weniger deutlich schwanken als bei einem System ohne Koppelwiderstand $R_K$ am Spannungs-Mittelabgriff 6. Das maximale Potenzial H+, H- beträgt 531 V, das minimale Potenzial H+, H- beträgt 269 V. Die Energieinhalte in den Y-Kapazitäten $C_{Y\_P}$, $C_{Y\_N}$ sind somit deutlich reduziert. Durch den im Vergleich zu den Isolationswiderständen $R_{iso\_p}$, $R_{iso\_N}$ recht geringen Koppelwiderstand $R_K$ kann die Umladung wesentlich schneller erfolgen. Der Isolationswächter 5 kann daher Isolationsfehler in kürzerer Zeit erkennen.

Bezugszeichenliste

| | |
|---|---|
| 1 | Bordnetz |
| 2 | HV-Batterie |
| 2.1, 2.2 | HV-Batterie |
| 3 | HV-Verbraucher |
| 4 | HV-Verbraucher |
| 5 | Isolationswächter |
| 6 | Spannungs-Mittelabgriff |
| 7 | Dreiphasen-Wechselspannungs-Anschluss |
| 8 | Gleichrichter |
| 9 | DC-Ladesäule |
| 11 | 3-Level-DC-Boost-Wandler |
| 12 | Massekabel |
| 13 | H-Brücke |
| 14 | H-Brücke |
| 15 | 3-Level-Inverter |
| 16 | elektrische Maschine |
| 17 | B&-Brücken-Inverter |
| C | Ausgangskapazität |
| $C_{x\_P}$, $C_{x\_N}$ | Kapazität |
| $C_{Y\_P}$, $C_{Y\_N}$ | Y-Kapazität |
| $C_{y\_P1}$, $C_{y\_N1}$ | Y-Kapazität |
| H+, H- | Potenzial |
| PA | Fahrzeugmasse |
| PA' | Masse |
| $R_F$ | Festwiderstand |
| $R_{iso\_P}$, $R_{iso\_N}$ | Isolationswiderstand |
| $R_K$ | Koppel-Widerstand |
| $R_L$ | Leitungswiderstand |
| $R_{mess\_p}$, $R_{mess\_n}$ | Messwiderstand |
| $R_V$ | variabler Widerstand |
| $R_{VP}$, $R_{VN}$ | Verbraucherwiderstand |
| $R_{iso\_P1}$, $R_{iso\_N1}$ | Isolationswiderstand |
| S1, S2 | Schalter |
| t | Zeit |
| $U_{S1}$, $U_{S2}$ | Schaltstellung |

**Patentansprüche**

1. Bordnetz (1) für ein Kraftfahrzeug, umfassend mindestens eine HV-Batterie (2) zur Bereitstellung eines positiven Potenzials (H+) und eines negativen Potenzial (H-) sowie mindestens einen HV-Verbraucher (3, 4), wobei ein Isolationswächter (5) zur Überwachung von Isolationswiderständen ($R_{iso\_P}$, $R_{iso\_N}$) zu einer vom Bordnetz (1) galvanisch getrennten Fahrzeugmasse (PA) vorgesehen ist, wobei zwischen dem positiven Potenzial (H+) und der Fahrzeugmasse (PA) sowie zwischen dem negativen Potenzial (H-) und der Fahrzeugmasse (PA) jeweils eine Y-Kapazität ($C_{Y\_P}$, $C_{Y\_N}$) vorgesehen ist,
**dadurch gekennzeichnet, dass**

ein im Bordnetz (1) oder in einer Komponente des Bordnetzes (1) vorhandener Spannungs-Mittelabgriff (6) zwischen dem positiven Potenzial (H+) und dem negativen Potenzial (H-) zwischen zwei als Spannungsteiler geschalteten Widerständen liegt oder von einem kapazitiven Spannungsteiler gebildet ist und mittels eines ohmschen Koppelwiderstandes ($R_K$) mit der Fahrzeugmasse (PA) verbunden ist,
wobei der Koppelwiderstand ($R_K$) als Reihenschaltung aus einem Festwiderstand ($R_F$) und einem variablen Widerstand ($R_V$) ausgebildet ist.

2. Bordnetz nach Anspruch 1,
**dadurch gekennzeichnet, dass**
die Widerstände des Spannungsteilers als in Reihe geschaltete HV-Verbraucher (3, 4) oder als Innenwiderstände mindestens zweier in Reihe geschalteter HV-Batterien (2.1, 2.2) ausgebildet sind.

**3.** Bordnetz (1) nach Anspruch 2,
**dadurch gekennzeichnet, dass**
die Widerstände des Spannungsteilers wesentlich kleiner im Vergleich zum Koppelwiderstand ($R_K$) und zu Messwiderständen ($R_{mess\_p}$, $R_{mess\_n}$) des Isolationswächters (5) sind, der als Widerstands-Isolationswächter ausgebildet ist.

**4.** Bordnetz (1) nach Anspruch 3,
**dadurch gekennzeichnet, dass**
die Messwiderstände ($R_{mess\_p}$, $R_{mess\_n}$) und der Koppelwiderstand ($R_K$) im Bereich von mehr als 100 kOhm liegen.

**5.** Bordnetz (1) nach einem der vorhergehenden Ansprüche,
**dadurch gekennzeichnet, dass** über den Koppelwiderstand ($R_K$) mindestens eines aus der folgenden Liste mit der Fahrzeugmasse (PA) gekoppelt ist:

- eine Reihenschaltung von HV-Spannungsversorgungen für Controlboards,
- eine Reihenschaltung von Halbbrücken und/oder H-Brücken,
- eine Multilevel-Halbbrücke,
- eine Reihenschaltung von Invertern,
- ein Multilevel-Inverter,
- eine Heizschaltung mit Reihenschaltungen von zwei oder mehreren Heizelementen,
- ein Abgriff eines Verbindungspunkts von Batterie-Modul-Reihenschaltungen.

**6.** Fahrzeug, umfassend ein Bordnetz (1) nach einem der vorhergehenden Ansprüche.

**7.** Verfahren zum Betrieb eines Fahrzeugs gemäß Anspruch 6,
**dadurch gekennzeichnet, dass**
der Koppelwiderstand ($R_K$) als Reihenschaltung aus dem Festwiderstand ($R_F$) und dem variablen Widerstand ($R_V$) ausgebildet ist, wobei dann, wenn das Fahrzeug nicht an einer DC-Ladesäule angeschlossen ist, ein hoher variabler Widerstand ($R_V$) eingestellt wird, wobei dann, wenn das Fahrzeug mit einer DC-Ladesäule verbunden ist, ein niedrigerer variabler Widerstand ($R_V$) eingestellt wird.

**Claims**

**1.** Vehicle electrical system (1) for a motor vehicle, comprising at least one HV battery (2) for providing a positive potential (H+) and a negative potential (H-) and at least one HV load (3, 4), an insulation monitor (5) for monitoring insulation resistances ($R_{iso\_P}$, $R_{iso\_N}$) to a vehicle ground (PA) galvanically isolated from the vehicle electrical system (1) being provided, between the positive potential (H+) and the vehicle ground (PA) and between the negative potential (H-) and the vehicle ground (PA) a Y capacitor ($C_{Y\_P}$, $C_{Y\_N}$) being provided in each case,
**characterized in that**

a voltage center tap (6), which is present in the vehicle electrical system (1) or in a component of the vehicle electrical system (1), lies between the positive potential (H+) and the negative potential (H-) between two resistors connected as voltage dividers or is formed by a capacitive voltage divider and is connected to the vehicle ground (PA) by means of an ohmic coupling resistor ($R_K$),
the coupling resistor ($R_K$) being designed as a series connection consisting of a fixed resistor ($R_F$) and a variable resistor (Rv).

**2.** Vehicle electrical system according to claim 1,
**characterized in that**
the resistors of the voltage divider are designed as HV loads (3, 4) connected in series or as internal resistors of at least two HV batteries (2.1, 2.2) connected in series.

**3.** Vehicle electrical system (1) according to claim 2,
**characterized in that**
the resistors of the voltage divider are significantly smaller compared to the coupling resistor ($R_K$) and measuring resistors ($R_{mess\_p}$, $R_{mess\_n}$) of the insulation monitor (5), which is designed as a resistance insulation monitor.

**4.** Vehicle electrical system (1) according to claim 3,
**characterized in that**
the measuring resistors ($R_{mess\_p}$, $R_{mess\_n}$) and the coupling resistor ($R_K$) are in the range of more than 100 kohms.

**5.** Vehicle electrical system (1) according to any of the preceding claims,
**characterized in that** at least one from the following list is coupled to the vehicle ground (PA) via the coupling resistor ($R_K$):

- a series connection of HV voltage supplies for control boards,
- a series connection of half-bridges and/or H-bridges,
- a multilevel half-bridge,
- a series connection of inverters,
- a multilevel inverter,
- a heating circuit having series connections of two or more heating elements,
- a tap of a connection point of battery module series connections.

**6.** Vehicle comprising a vehicle electrical system (1) according to any of the preceding claims.

**7.** Method for operating a vehicle according to claim 6, **characterized in that**
the coupling resistor ($R_K$) is designed as a series connection consisting of the fixed resistor ($R_F$) and the variable resistor (Rv), a high variable resistance (Rv) being set when the vehicle is not connected to a DC charging station, a lower variable resistance (Rv) being set when the vehicle is connected to a DC charging station.

**Revendications**

**1.** Réseau de bord (1) pour un véhicule automobile, comprenant au moins une batterie à haute tension (2) pour la mise à disposition d'un potentiel positif (H+) et d'un potentiel négatif (H-) ainsi qu'au moins un récepteur à haute tension (3, 4), dans lequel un contrôleur d'isolement (5) est prévu pour la surveillance de résistances d'isolement ($R_{iso\_P}$, $R_{iso\_N}$) par rapport à une masse de véhicule (PA) séparée galvaniquement du réseau de bord (1), dans lequel une capacité Y ($C_{Y\_P}$, $C_{Y\_N}$) est respectivement prévue entre le potentiel positif (H+) et la masse de véhicule (PA) ainsi qu'entre le potentiel négatif (H-) et la masse de véhicule (PA), **caractérisé en ce que**

une prise médiane de tension (6) existant dans le réseau de bord (1) ou dans un composant du réseau de bord (1) est située entre le potentiel positif (H+) et le potentiel négatif (H-), entre deux résistances montées sous forme de diviseur de tension, ou est formée par un diviseur de tension capacitif et est connectée à la masse de véhicule (PA) au moyen d'une résistance de couplage ($R_K$) ohmique,
dans lequel la résistance de couplage ($R_K$) est réalisée sous forme de montage en série d'une résistance fixe ($R_F$) et d'une résistance variable (Rv).

**2.** Réseau de bord selon la revendication 1, **caractérisé en ce que**
les résistances du diviseur de tension sont réalisées sous forme de récepteurs à haute tension (3, 4) montés en série ou sous forme de résistances internes d'au moins deux batteries à haute tension (2.1, 2.2) montées en série.

**3.** Réseau de bord (1) selon la revendication 2, **caractérisé en ce que**
les résistances du diviseur de tension sont sensiblement plus petites par rapport à la résistance de couplage ($R_K$) et aux résistances de mesure ($R_{mess\_p}$, $R_{mess\_n}$) du contrôleur d'isolement (5), lequel est réalisé sous forme de contrôleur d'isolement de résistance.

**4.** Réseau de bord (1) selon la revendication 3, **caractérisé en ce que**
les résistances de mesure ($R_{mess\_p}$, $R_{mess\_n}$) et la résistance de couplage ($R_K$) se situent dans la plage supérieure à 100 kOhm.

**5.** Réseau de bord (1) selon l'une des revendications précédentes,
**caractérisé en ce qu'**au moins l'un parmi la liste suivante est couplé à la masse de véhicule (PA) par l'intermédiaire de la résistance de couplage ($R_K$) :

- un montage en série d'alimentations en tension à haute tension pour des tableaux de commande,
- un montage en série de demi-ponts et/ou de ponts en H,
- un demi-pont multiniveau,
- un montage en série de convertisseurs,
- un convertisseur multiniveau,
- un circuit de chauffage comportant des montages en série de deux éléments chauffants ou plus,
- une prise d'un point de connexion de montages en série de modules de batterie.

**6.** Véhicule, comprenant un réseau de bord (1) selon l'une des revendications précédentes.

**7.** Procédé permettant de faire fonctionner un véhicule selon la revendication 6,
**caractérisé en ce que**
la résistance de couplage ($R_K$) est réalisée sous forme de montage en série à partir de la résistance fixe ($R_F$) et de la résistance variable (Rv), dans lequel une résistance variable (Rv) élevée est établie lorsque le véhicule n'est pas connectée à une colonne de charge à courant continu, dans lequel une résistance variable (Rv) plus faible est établie lorsque le véhicule est connecté à une colonne de charge à courant continu.

FIG 1

FIG 2

FIG 3

EP 4 377 123 B1

FIG 4

EP 4 377 123 B1

FIG 5

FIG 6

FIG 7

FIG 8

EP 4 377 123 B1

FIG 9

FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019202892 A1